Europäisches Patentamt

European Patent Office

Office européen des brevets

(11) Numéro de publication: **0 273 824 B1**

# FASCICULE DE BREVET EUROPEEN

(45) Date de publication de fascicule du brevet:
29.05.91

(51) Int. Cl.⁵: **G01B 7/03**, G06K 11/06, G06K 11/12

(21) Numéro de dépôt: 87402905.1

(22) Date de dépôt: **18.12.87**

(54) **Dispositif de localisation bidimensionnelle d'évènements générateurs de courant sur une surface résistive.**

(30) Priorité: **18.12.86 FR 8617744**

(43) Date de publication de la demande:
**06.07.88 Bulletin 88/27**

(45) Mention de la délivrance du brevet:
**29.05.91 Bulletin 91/22**

(84) Etats contractants désignés:
**AT BE CH DE ES FR GB IT LI LU NL SE**

(56) Documents cités:
**FR-A- 2 181 350**
**FR-A- 2 463 955**
**FR-A- 2 522 406**
**GB-A- 1 168 427**

**PATENT ABSTRACTS OF JAPAN, vol. 7, no. 202 (P-221)[1347], 7 septembre 1983; & JP-A-58 99 889 (MATSUSHITA DENKI SANGYO K.K.) 14-06-1983**

(73) Titulaire: **CENTRE NATIONAL DE LA RECHER-CHE SCIENTIFIQUE**
**15, quai Anatole France**
**F-75007 Paris(FR)**

(72) Inventeur: **Bruere-Dawson, Roger**
**28, allée des Bois Les Rochers**
**F-91160 Saulx Les Chartreux(FR)**
Inventeur: **Marechal, Bernard**
**Rua Pacheco Leao 1206/201 Jardin Botanico**
**BR-22460 Rio de Janeiro(BR)**
Inventeur: **Froissart, Marcel**
**11, Rue du Val de Grâce**
**F-75005 Paris(FR)**
Inventeur: **Nogueira de Souza, Marcio**
**Rua honorio 436 Todos Santos**
**BR-20781 Rio de Janeiro-RJ-Cep(BR)**

(74) Mandataire: **Joly, Jean-Jacques et al**
**CABINET BEAU DE LOMENIE 55, rue d'Amsterdam**
**F-75008 Paris(FR)**

## Description

La présente invention concerne un dispositif de localisation bidimensionnelle d'évènements générateurs de courant sur une surface résistive.

Plus particulièrement, l'invention a pour objet un dispositif du type comportant des électrodes fixées sur le pourtour de la surface résistive pour recueillir des courants engendrés par injection de courant ou de charges électriques en des points de la surface résistive, et un circuit relié aux électrodes pour élaborer, à partir des courants recueillis, des signaux représentatifs des coordonnées desdits points dans un système de coordonnées prédéterminé.

Des détecteurs de position permettant la localisation bidimensionnelle d'évènements générateurs de courant, par exemple des impacts de particules éventuellement amplifiés par cascades électromagnétiques sur des fils, ou des injections de charges électriques par contact ou par influence, sont susceptibles d'applications dans de nombreux domaines tels que l'astronomie, la cristallographie, l'imagerie médicale nucléaire et les dispositifs graphiques informatisés utilisant des tables de numérisation, ou des pointés directs sur l'écran (dans le cas d'un dispositif transparent).

Une des principales difficultés rencontrées pour la réalisation de dispositifs de localisation du type précité est d'obtenir une relation linéaire entre les signaux élaborés représentatifs des coordonnées des emplacements des évènements et les valeurs réelles de ces coordonnées, ceci afin de pouvoir fournir une image des emplacements des évènements sans distorsion.

La demande de brevet français No 2 463 955 décrit un dispositif de localisation utilisant une plaquette résistive rectangulaire munie de contacts électriques répartis le long de ses côtés. Les contacts électriques situés sur un même côté sont reliés à une même ligne de sommation particulière par l'intermédiaire de résistances respectives. Les lignes de sommation associées à deux côtés opposés sont reliées aux entrées d'un circuit différentiel qui délivre un signal analogique représentatif d'une des deux coordonnées du point d'injection de charges électriques ayant donné naissance aux courants recueillis sur les différents contacts. Les lignes de sommation associées aux deux autres côtés sont reliées aux entrées d'un autre circuit différentiel qui délivre un signal analogique représentatif de l'autre coordonnée du point.

Un choix particulier des résistances reliant les points de contact aux lignes de sommation peut permettre de minimiser les distorsions mais non, tant s'en faut, les supprimer.

La demande de brevet japonais publiée sous le No 58-99889 décrit aussi un dispositif de localisation utilisant une plaquette résistive rectangulaire munie de contacts électriques reliés à des lignes de sommation par des résistances particulières. Dans le but de réduire les distorsions, des résistances sont insérées entre contacts électriques situés sur deux côtés adjacents de la plaque, notamment entre contacts proches des sommets de la plaque.

Là encore, les distorsions, bien que réduites, restent significatives.

Une autre voie d'élimination des distorsions consiste à convertir sous forme numérique les amplitudes des courants recueillis sur les électrodes, éventuellement après sommations et normalisation, puis à traiter les valeurs numériques obtenues par des moyens informatiques pour corriger les distorsions. Le recours à des moyens informatiques se traduit par un coût relativement élevé et le retard résultant du temps de traitement peut, dans certaines applications, être particulièrement gênant. De plus, la distorsion varie dans le temps et avec les conditions environnantes. La fonction de correction de non-linéarité déterminée à un instant donné n'est alors plus valable ultérieurement.

Pour réduire la non-linéarité, il a encore été proposé d'utiliser une géométrie particulière des électrodes. Mais la non-linéarité n'est pas entièrement supprimée. Un traitement informatique de correction de distorsions est toujours nécessaire, avec les inconvénients indiqués plus haut qui s'ajoutent aux difficultés de réalisation des électrodes particulières.

Aussi, la présente invention a-t-elle pour but de fournir un dispositif de localisation fournissant des signaux représentant une image sans distorsion, sans demander de traitements informatiques ou une complication particulière des électrodes.

Ce but est atteint au moyen d'un dispositif de localisation comportant des électrodes fixées sur le pourtour de la surface résistive pour recueillir des courants engendrés par injection de courant ou charges électriques en des points de la surface résistive, et au moins trois lignes de sommation de courants reliées aux électrodes par des éléments résistifs discrets pour obtenir, sur les lignes de sommation, des signaux analogiques dont l'amplitude est fonction des coordonnées desdits points dans un système de coordonnées de référence prédéterminé, dispositif dans lequel, conformément à l'invention,
chaque électrode est reliée au moyen de résistances respectives à au moins trois lignes de sommation de sorte qu'au moins deux d'entre elles délivrent des signaux analogiques dont les amplitudes sont des fonctions sensiblement linéaires des coordonnées recherchées.

Le fait de relier chaque électrode à au moins trois lignes de sommation est une caractéristiques essentielle de l'invention car c'est une condition nécessaire pour obtenir au moins deux signaux qui soient des fonctions linéaires ou quasi-linéaires des coordonnées recherchées, c'est-à-dire pour disposer directement sous forme analogique d'informations de position sans distorsion. En effet, si l'on se place dans le cas minimum de trois lignes de sommation, les courants recueillis par les électrodes se partagent en trois fractions : des premières fractions qui, combinées par une première ligne de sommation fournissent un courant dont l'intensité est fonction linéaire des deux coordonnées (ou d'une première des deux), des deuxièmes fractions qui, combinées par une deuxième ligne de sommation, fournissent un courant dont l'intensité est fonction linéaire des deux coordonnées (ou de la deuxième des deux) et des troisièmes fractions qui constituent les fractions excédentaires des courants recueillis par les électrodes et qui sont évacuées par la troisième ligne de sommation, par exemple vers la masse.

Le dispositif de localisation conforme à l'invention se distingue par là-même des dispositifs de l'art antérieur utilisant des lignes de sommation et dans lesquels chaque électrode n'est reliée par une résistance qu'à une, voire tout au plus deux lignes de sommation. Compte-tenu de ce qui est indiqué ci-avant, l'absence de liaison de chaque électrode avec une troisième ligne de sommation empêche l'évacuation de la fraction excédentaire du courant recueilli sur cette électrode, ce qui induit nécessairement une distorsion.

Par ailleurs, comparé aux systèmes informatiques de correction de distorsion, le dispositif selon l'invention ajoute, à l'économie des moyens informatiques de correction, l'avantage d'une disponibilité quasi-immédiate des signaux permettant de fournir, par exemple sur un écran d'oscilloscope, une image fidèle des évènements détectés.

Dans une forme particulière de réalisation de l'invention, la surface résistive a une forme de disque et les électrodes sont réparties le long de la circonférence du disque. Toutefois, d'autres formes de surfaces résistives pourront être utilisées comme, par exemple, des surfaces rectangulaires ou carrées.

La relation entre les signaux obtenus sur les lignes de sommation et les coordonnées recherchées est d'autant plus proche d'une fonction linéaire parfaite que le nombre d'électrodes est élevé, des distorsions ne pouvant substituer que pour une zone périphérique de la surface dont la largeur est inférieure au pas entre électrodes. En pratique, le nombre d'électrodes sera de préférence choisi au moins égal à 16.

Par ailleurs, afin que le courant recueilli sur une électrode ne soit pas affecté par les résistances insérées entre cette électrode et les lignes de sommation, les valeurs de ces résistances et de la résistivité de la surface résistive sont choisies de manière que, vues de l'électrode, la résistance de la surface résistive ne soit pas trop faible par rapport à celle du réseau de sommation.

Le nombre des lignes de sommations auxquelles chaque électrode est reliée n'est bien entendu pas limité à trois. Une ou plusieurs lignes de sommation supplémentaires peuvent être prévues pour, par une combinaison des signaux obtenus sur ces lignes, s'affranchir de coefficients existant dans les relations linéaires entre ces signaux et les coordonnées recherchées et/ou éliminer les signaux parasites en mode commun.

L'invention sera mieux comprise à la lecture de la description faite ci-après, à titre indicatif mais non limitatif, en référence aux dessins annexés qui illustrent :
- figure 1 : une vue schématique d'un mode de réalisation d'un dispositif de localisation bidimensionnelle conforme à l'invention,
- figure 2 : un motif formé par des points d'injection de courant sur la surface résistive d'un dispositif de localisation du type de celui illustré par la figure 1,
- figures 3 à 5 : les images du motif de la figure 2 obtenues au moyen de dispositifs de localisation du type de celui illustré par la figure 1, respectivement avec 32, 16 et 8 électrodes, et
- figure 6 : une vue schématique partielle d'un autre mode de réalisation d'un dispositif de localisation conforme à l'invention.

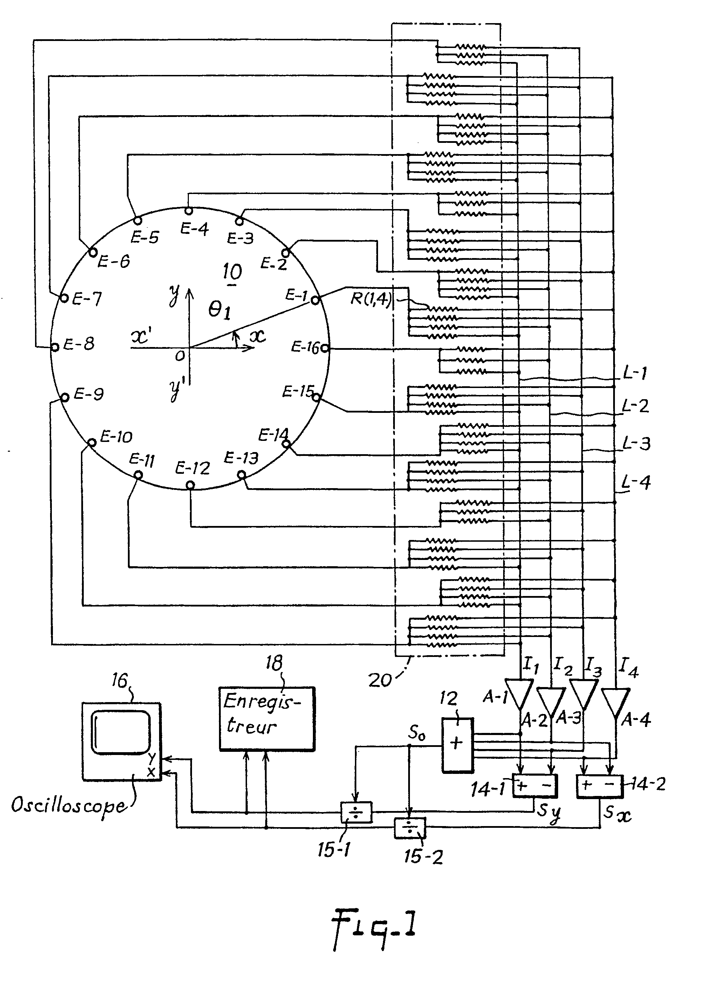

Un mode particulier de réalisation d'un dispositif selon l'invention sera maintenant décrit en référence à la figure 1.

Le dispositif de localisation comprend une surface résistive 10 sur le pourtour de laquelle sont fixées des électrodes E-1 à E-16 reliées à quatre lignes de sommation L-1 à L-4 par un réseau résistif 20.

La surface résistive 10 est en un matériau présentant une résistivité de surface uniforme, par exemple en papier graphité placé sur un support rigide, la face conductrice du papier graphité étant bien entendu tournée vers l'extérieur pour laisser ouvert l'accès à la couche résistive de graphite. Dans l'exemple illustré, la surface résistive 10 a la forme d'un disque de rayon R.

Le dispositif de localisation est utilisable comme détecteur de particules, par exemple en imagerie nucléaire dans le domaine médical, scientifique ou industriel, afin de fournir une image bidimensionnelle des emplacements des points d'impact sur la surface résistive des particules à détecter ou de charges dérivées de ces particules par avalanches électroniques.

Le dispositif de localisation est également utilisable comme détecteur de position pour la saisie de données graphiques, par exemple pour une table à numériser. Les données graphiques sont introduites au moyen d'un outil tel qu'un style injectant un courant électrique dans la surface résistive. On notera que la surface résistive et son support peuvent alors être réalisés sous forme de films souples et/ou transparents pour saisir des données graphiques sur une surface non nécessairement plane.

Le courant injecté peut être un courant continu, l'injection des charges électriques étant réalisée par contact avec la surface résistive, ou un courant alternatif, tel qu'un courant HF, les charges électriques pouvant alors être injectées par influence, c'est-à-dire par voie capacitive, sans contact avec la surface résistive.

Plusieurs électrodes sont fixées sur le pourtour du disque 10. Comme déjà indiqué, le nombre d'électrodes doit être relativement élevé. Dans l'exemple illustré, 16 électrodes E-1 à E-16 sont prévues, lesquelles sont disposées à intervalles réguliers. La disposition des électrodes à intervalles réguliers ou, à tout le moins, par paires d'électrodes diamétralement opposés, n'est pas une nécessité, mais permet de simplifier la définition du réseau résistif 20.

Les courants recueillis sur les électrodes E-1 à E-16 par suite de la génération de courants électriques par des évènements localisés en des points de la surface résistive 10 sont combinés par le réseau résistif 20 afin de fournir des signaux dont l'amplitude varie linéairement en fonction des coordonnées de ces points dans un système de coordonnées prédéterminé.

Dans l'exemple illustré, le système de coordonnées est constitué par deux axes orthogonaux $x'x$ et $y'y$ ayant leur origine 0 au centre du disque 10, et le réseau résistif 20 est déterminé pour obtenir, sur les lignes de sommation L-1, L-2, L-3, L-4 des courants respectifs $I_1$, $I_2$, $I_3$, $I_4$ ayant pour valeurs :

$$I_1 = (I_0/4) + a\,Y \quad (1)$$
$$I_2 = (I_0/4) - a\,X \quad (2)$$
$$I_3 = (I_0/4) - a\,Y \quad (3)$$
$$I_4 = (I_0/4) + a\,X \quad (4)$$

$I_0$ et a étant des quantités fixes et X et Y les coordonnées du point d'impact ou d'injection dans le système de coordonnées ($x'x$, $y'y$).

Les inventeurs ont montré que, pour arriver à ce résultat, chaque électrode doit être reliée à chaque ligne de sommation par un élément résistif discret dont la conductance est donnée par

$$G(n, l) = \frac{G}{4}(1 + \cos(\theta_n - \theta_l)), \text{ où} \quad (5)$$

$G(n, l)$ est la conductance du circuit inséré entre la $n^{ème}$ électrode E-n et la $l^{ème}$ ligne de sommation L-1, c'est-à-dire l'inverse de la résistance $R(n, l)$ reliant cette $n^{ème}$ électrode à cette $l^{ème}$ ligne,

G est une valeur fixe prédéterminée représentant la somme des conductances reliant une électrode quelconque aux lignes de sommation,

$\theta_n$ est l'angle que forme par rapport à Ox le rayon sur lequel est située l'électrode E-n ; dans le mode de réalisation illustré par la figure 1, $\theta_n$ est égal à $(n/N)\,2\pi$ , N étant le nombre total d'électrodes (16 dans l'exemple envisagé),

n est un nombre entier prenant toutes valeurs de 1 à N,

$\theta_l$ est un angle tel que le signal sur la ligne de sommation. L-l est une fonction linéaire de la coordonnée le long de l'axe faisant l'angle $\theta_l$ par rapport à Ox ; dans le mode de réalisation illustré par la figure 1, $\theta_l$ est égal à $(l/4)\,2\pi$ , et

l est un nombre entier prenant toutes valeurs de 1 à 4, ce qui donne pour $\theta_l$ les valeurs $\pi/2$ (coordonnée Y), $\pi$ (coordonnée -X), $3\pi/2$ (coordonnée -Y) et $2\pi$ (coordonnée X).

Sur la figure 1, on voit que pour chaque électrode située sur les axes $x'x$ et $y'y$, la valeur de la conductance insérée entre cette électrode et l'une des lignes de sommation peut prendre la valeur nulle ; il n'y a alors pas de résistance branchée entre l'électrode et cette ligne de sommation. Bien entendu, il n'est pas nécessaire d'avoir des électrodes disposées sur les axes de coordonnées, ce qui conduit alors à avoir une résistance $R(n, l)$ non infinie entre chaque électrode et chaque ligne.

Les courants $I_1$, $I_2$, $I_3$, $I_4$ obtenus sur les lignes de sommation sont amplifiés par des amplificateurs de courant respectifs A-1, A-2, A-3, A-4 ayant même gain k. Les signaux amplifiés sont appliqués aux entrées d'un additionneur analogique 12 qui délivre un signal $S_0 = kI_0$. Deux autres circuits analogiques 14-1, 14-2 fonctionnant en soustracteurs reçoivent, l'un les signaux amplifiés $kI_1$ et $kI_3$ et l'autre les signaux amplifiés $kI_4$ et $kI_2$ pour fournir les signaux :

$$S_X = k (I_4 - I_2) = 2 k a X, \text{et}$$
$$S_Y = k (I_1 - I_3) = 2 k a Y.$$

On obtient de la sorte deux signaux analogiques $S_X$, $S_Y$ proportionnels aux coordonnées X et Y. Les signaux $S_X$, $S_Y$ sont transmis aux entrées d'un oscilloscope 16 pour obtenir, de façon quasi-instantanée, une image sans distorsion du motif formé par les emplacements des évènements sur la surface résistive 10. Les signaux $S_X$, $S_Y$ peuvent être appliqués aux entrées de l'oscilloscope 16 directement ou, comme dans l'exemple illustré, après normalisation par division par $S_0$ au moyen de diviseurs respectifs 15-1, 15-2, afin de s'affranchir des fluctuations sur le signal $I_0$ injecté.

Les signaux $S_X$, $S_Y$, normalisés ou non et, éventuellement, les signaux $S_0$, $kI_1$, $kI_2$, $kI_3$ et $kI_4$ peuvent être appliqués aux entrées d'un enregistreur 18 en vue de traitements ultérieurs, par exemple de numérisation et mémorisation.

En variante, les signaux $kI_1$, $kI_2$, $kI_3$ et $kI_4$ peuvent être traités par des moyens numériques après conversion au moyen de convertisseurs analogiques-numériques branchés en sortie des amplificateurs A-1, A-2, A-3 et A-4.

Le coefficient de sensibilité a reliant les signaux obtenus aux coordonnées qu'ils représentent - équations (1) à (4)-est limité évidemment à $(I_0 4R)$. Il s'en rapproche d'autant mieux que les courants recueillis sur les électrodes ne sont pas affectés par le réseau de sommation et par les impédances d'entrée Z des amplificateurs de courant A-1 à A-4. De plus, les valeurs de conductances du réseau de sommation données par l'équation (5) conviennent d'autant mieux que cette impédance d'entrée Z est plus faible. C'est pourquoi les relations suivantes doivent de préférence être satisfaites :

$$R_\square \geq \tfrac{1}{G} \geq N.Z \quad (6)$$

le signe $\geq$ signifiant "supérieur ou de l'ordre de", et $R_\square$ étant la résistance d'un carré de la surface résistive 10 entre deux côtés opposés.

Un dispositif du type de celui représenté sur la figure 1 a été réalisé en utilisant, pour la surface résistive 10, un disque en papier graphité collé sur un support isolant rigide, et de 260 mm de diamètre. La résistivité $R_\square$ de surface du papier graphité est égale à environ 6,2 kohms. Les électrodes, au nombre de 32 (au lieu de 16 comme dans le cas de la figure 1) sont des pastilles circulaires de diamètre égal à 3,2 mm, fixées à intervalles réguliers le long d'un cercle de diamètre égal à 256,8 mm et électriquement reliées au disque par une peinture à l'argent.

Les résistances R (n, l) pondérant les contributions des courants recueillis sur les électrodes aux courants disponibles sur les lignes de sommation sont déterminées en choisissant une valeur de conductance équivalente G telle que 1/G = 135 ohms. Cette valeur satisfait aux conditions (6) ci-dessus, l'impédance d'entrée des amplificateurs de courant utilisés étant égale à 3 ohms. La valeur de G est aussi choisie pour aboutir à des valeurs de résistances R (n, l) les plus proches possibles de valeurs disponibles dans le commerce.

Les valeurs théoriques calculées des résistances R (n, l) et les valeurs réelles utilisées, car disponibles dans le commerce, sont données par le tableau 1 figurant à la fin de cette description.

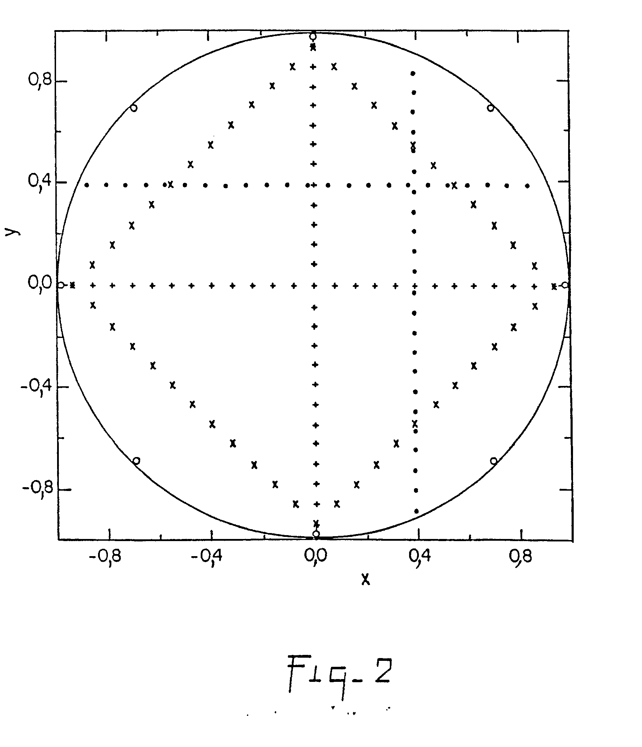

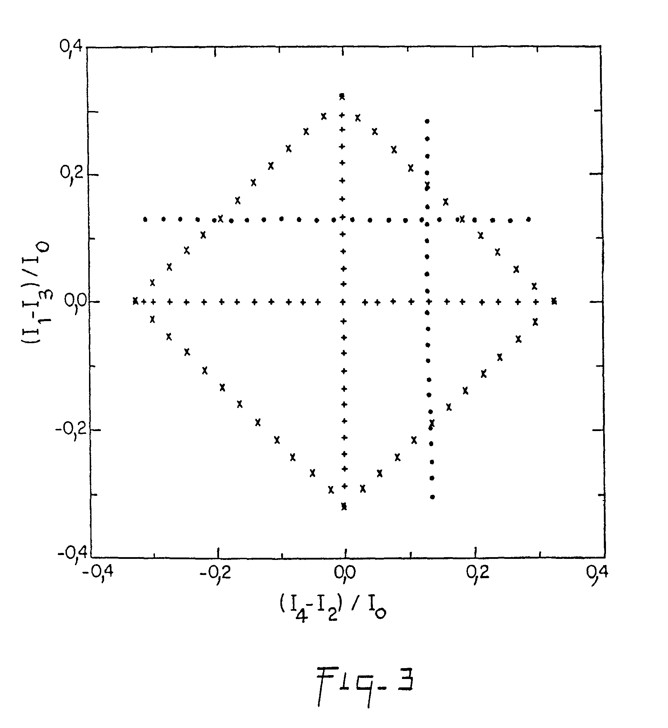

Le dispositif de localisation ainsi réalisé a été essayé en injectant des impulsions de courant successivement aux différents points de la surface résistive formant le motif représenté sur la figure 2. L'image de ce motif obtenue à partir des signaux $S_X$, $S_Y$ recueillis en sortie du réseau de sommation est représentée sur la figure 3. On constate la quasi-inexistence de distorsion y compris dans la zone marginale de l'image. En fait, les erreurs de localisation se révèlent être inférieures à la résolution spatiale du dispositif.

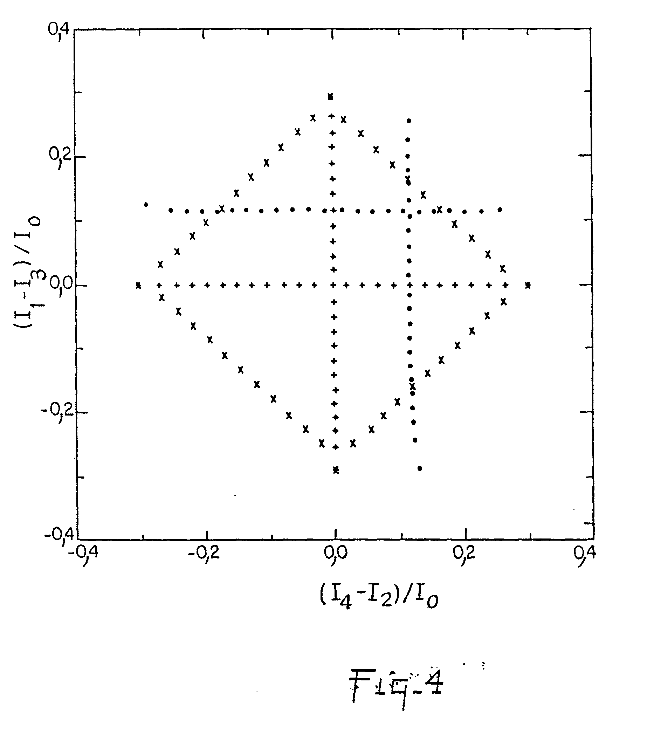

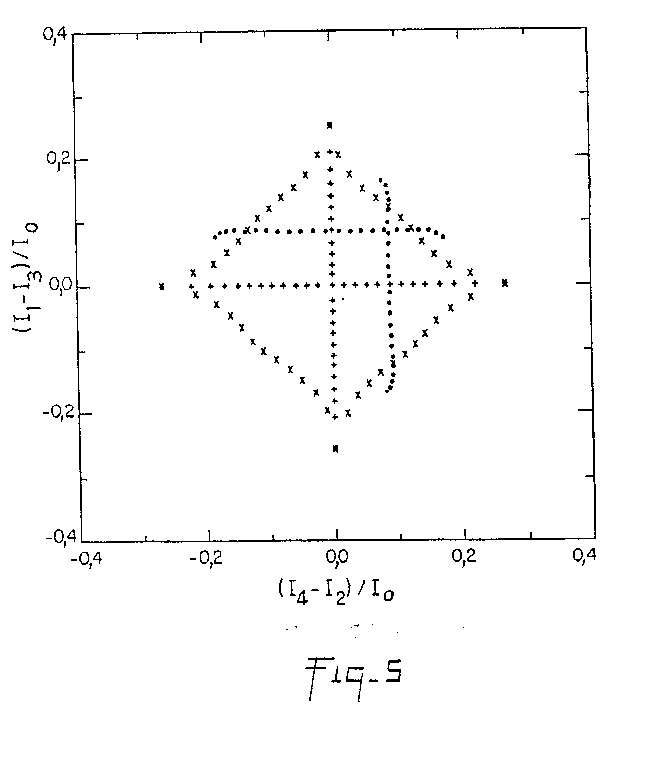

A titre de comparaison, le même essai a été réalisé avec des dispositifs de localisation différents du précédent uniquement par le nombre d'électrodes. Les images obtenues avec 16 électrodes et avec 8 électrodes sont représentées sur les figures 4 et 5, respectivement. On constate que la distorsion reste encore acceptable avec 16 électrodes, mais devient relativement importante dans les zones marginales de l'image avec 8 électrodes. Pour cette raison, on choisira de préférence un nombre d'électrodes au moins égal à 16. D'une façon générale, la zone périphérique de distorsion étant d'une largeur inférieure à la distance entre électrodes successives, on choisira le nombre d'électrodes de manière que la distance entre deux électrodes voisines soit au plus égale à la largeur la plus grande admissible de la zone de distorsion à la périphérie de la surface résistive.

Dans ce qui précède, on a envisagé l'utilisation de quatre lignes de sommation sur lesquelles les signaux sont des mêmes fonctions linéaires de X, -X, Y et -Y. Par combinaison entre ces signaux il est possible d'éliminer la quantité $I_0$ et de s'affranchir des signaux parasites en mode commun. Toutefois, comme déjà indiqué, on peut se contenter de deux lignes de sommation pour obtenir des signaux fonctions linéaires de X et Y, une troisième ligne mettant à la masse le courant excédentaire de chaque électrode.

On notera aussi qu'un choix différent du réseau résistif permet d'obtenir directement des coordonnées non seulement orthogonales, mais aussi bien obliques, triangulaires, etc.

La surface résistive 10 pourra avoir une forme autre qu'un disque, par exemple une forme rectangulaire ou carrée, sans rendre impossible la détermination d'un réseau de sommation purement résistif donnant des signaux analogiques fonctions linéaires des coordonnées recherchées. Dans tous les cas, on obtient une élimination des distorsions, par un ajustement convenable des résistances, sauf dans une zone périphérique de largeur inférieure à la distance entre électrodes.

Un programme de simulation sur ordinateur a été réalisé. Il rend parfaitement compte des résultats obtenus sur la réalisation du dispositif, dans le cas d'une forme circulaire de la surface résistive.

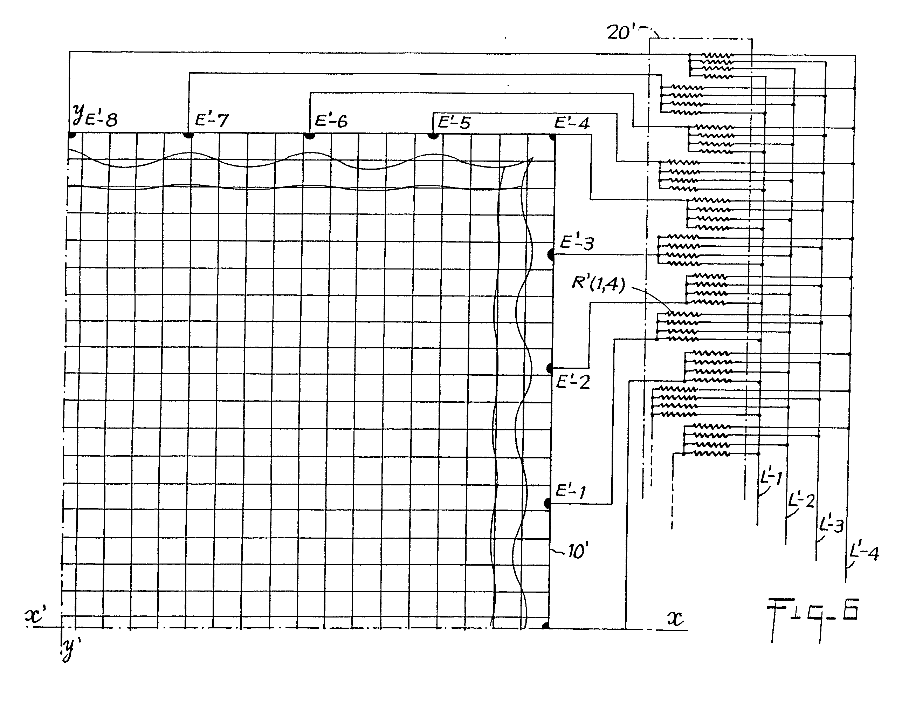

Un mode de réalisation d'un dispositif conforme à l'invention utilisant une surface résistive carrée 10' est illustré par la figure 6. Pour simplifier la représentation, un quart seulement de la plaque carrée est illustré, le reste se déduisant par symétrie par rapport aux axes x'x et y'y.

Dans l'exemple illustré, la plaque résistive 10' est de forme carrée et est munie de 32 électrodes E'-1 à E'-32 également réparties sur son pourtour, une électrode étant disposée à chaque sommet.

Un réseau résistif 20' relie les électrodes E'-1 à E'-32 à quatre lignes de sommation L'-1 à L'-4. Chaque électrode E'-n' (n' prenant toute valeur de à 32) est reliée à chaque ligne de sommation L'-l' (l' prenant toute valeur de 1 à 4) par une résistance R'(n', l'). Les valeurs de R'(n', l') sont choisies pour disposer sur les lignes de sommation L'-1, L'-2, L'-3 et L'-4 de courants fonctions linéaires de Y, -X, -Y et X, X et Y étant les coordonnées du point d'injection de courant ou de charges dans la surface résistive 10' par raport au système de coordonnées (x'x, y'y). Les signaux disponibles sur les lignes de sommation L'-1 à L'-4 sont traités de façon identique à celle décrite plus haut en relation avec le mode de réalisation de la figure 1.

Le programme de simulation sur ordinateur sus-mentionné a permis d'optimiser les valeurs des résistances et de calculer les distorsions résiduelles.

Le tableau 2 à la fin de cette description donne les valeurs théoriques des résistances R'(n', l') reliant les électrodes E'-1 à E'-8 apparaissant sur la figure 6, aux quatre lignes de sommation.

Sur la figure 6, on a représenté de façon superposée, d'une part, un motif (quadrillage) formé sur la surface 10' et, d'autre part, l'image de ce motif telle qu'obtenue par le programme de simulation mentionné ci-avant. Si l'on excepte une zone marginale de l'image de largeur légèrement inférieure au pas entre électrodes, aucune distorsion n'est visible dans l'image obtenue. Ceci rejoint les résultats expérimentalement vérifiés avec la surface 10 de forme circulaire.

Tableau 1 : valeurs des résistances R (n, 1) du réseau 20 (Fig. 1)

$$1 / R(n, 1) = \frac{G}{4} \left(1 + \cos \left( \frac{n}{N} 2\pi - \frac{1}{4} 2\pi \right)\right),$$

avec 1/G = 135 ohms, n variant de 1 à N = 32, 1 variant de 1 à 4.

| (n, 1) | R (n,1) théorique (ohms) | R (n, 1) réelle (ohms) |
|---|---|---|
| (1,1), (9,2), (17,3), (25,4) (7,4), (15,1), (23,2), (31,3) | 452 | 470 |
| (1,2), (9,3), (17,4), (25,1) (7,3), (15,4), (23,1), (31,2) | 28104 | 27000 |
| (1,3), (9,4), (17,1), (25,2) (7,2), (15,3), (23,4), (31,1) | 671 | 680 |
| (1,4), (9,1), (17,2), (25,3) (7,1), (15,2), (23,3), (31,4) | 273 | 270 |
| (2,1), (10,2), (18,3), (26,4) (6,4), (14,1), (22,2), (30,3) | 391 | 390 |
| (2,2), (10,3), (18,4), (26,1) (6,3), (14,4), (22,1), (30,2) | 7095 | 6800 |
| (2,3), (10,4), (18,1), (26,2) (6,2), (14,3), (22,4), (30,1) | 875 | 910 |

| | | |
|---|---|---|
| (2,4), (10,1), (18,2), (26,3) : | 281 : | 270 |
| (6,1), (14,2), (22,3), (30,4) : | : | |
| (3,1), (11,2), (19,3), (27,4) : | 347 : | 330 |
| (5,4), (13,1), (21,2), (29,3) : | : | |
| (3,2), (11,3), (19,4), (27,1) : | 3204 : | 3300 |
| (5,3), (13,4), (27,1), (29,2) : | : | |
| (3,3), (11,4), (19,1), (27,2) : | 1215 : | 1200 |
| (5,2), (13,3), (21,4), (29,1) : | : | |
| (3,4), (11,1), (19,2), (27,3) : | 295 : | 270 |
| (5,1), (13,2), (21,3), (29,4) : | : | |
| (4,1), (12,2), (20,3), (28,4) : | 316 : | 330 |
| (4,4), (12,1), (20,2), (28,3) : | : | |
| (4,2), (12,3), (20,4), (28,1) : | 1844 : | 1800 |
| (4,3), (12,4), (20,1), (28,2) : | : | |
| (8,1), (16,2), (24,3), (32,4) : | 270 : | 270 |
| (8,2), (16,3), (24,4), (32,1) : | 540 : | 560 |
| (8,4), (16,1), (24,2), (32,3) : | : | |
| (8,3), (16,4), (24,1), (32,2) : | infini : | infini |
| : | : | |

Tableau 2 : valeurs des résistances R'(n', l') du réseau 20' (fig. 6)

======================================================================

| (n', l') | :R'(n',l'): : (ohms) : | (n', l') | :R'(n',l'): : (ohms) : |
|---|---|---|---|
| :(1,2),(2,2),(3,2),(4,2), :(4,3),(5,3),(6,3),(7,3), :(8,3) | : infini : : (ou non :connecté): | (2,1),(6,4) | : 342 : |
| :(5,2),(3,3) | : 1342 : | (3,1),(5,4) | : 401 : |
| :(6,2),(2,3) | : 865 : | (4,1),(4,4) | : 250 : |
| :(7,2),(1,3) | : 622 : | (5,1),(3,4) | : 258 : |
| :(8,2),(8,4) | : 489 : | (6,1),(2,4) | : 255 : |
| :(1,1),(7,4) | : 296 : | (7,1),(1,4),(8,1) | : 256 : |

======================================================================

Ces valeurs se réfèrent à une valeur de la résistance de surface $R_\square$ = 6200 ohms, et à des valeurs de résistance d'entrée des amplificateurs Z = 5 ohms.

## Revendications

1. Dispositif de localisation bidimensionnelle d'évènements générateurs de courant sur une surface résistive, comportant des électrodes (E-1, E-2, ... ; E'-1, E'-2, ...) fixées sur le pourtour de la surface résistive (10 ; 10') pour recueillir des courants engendrés par injection de courant ou charges électriques en des points de la surface résistive, et au moins trois lignes de sommation de courants (L-1 à L-4 ; L'-1 à L-4) reliées aux électrodes par des éléments résistifs discrets (R(n, l) ; R'(n', l')) pour obtenir, sur les lignes de sommation, des signaux analogiques dont l'amplitude est fonction des coordonnées desdits points dans un système de coordonnées de référence prédéterminé, caractérisé en ce que :
chaque électrode (E-1, E-2, ... ; E'-1, E'-2, ...) est reliée au moyen de résistances respectives à au moins trois lignes de sommation (L-1 à L-4 ; L'-1 à L'-4) de sorte qu'au moins deux d'entre elles délivrent des signaux analogiques ($I_1$, $I_2$, $I_3$, $I_4$) dont les amplitudes sont des fonctions sensiblement linéaires des coordonnées recherchées (X, Y).

**2.** Dispositif selon la revendication 1, caractérisé en ce que le nombre des électrodes (E-1, E-2, ... ; E'-1, E'-2, ...) est choisi de manière que la distance entre deux électrodes voisines soit au plus égale à la largeur admissible d'une zone de distorsion à la périphérie de la surface résistive.

**3.** Dispositif selon la revendication 2, caractérisé en ce que les électrodes (E-1, E-2, .... ; E'-1, E'-2, ...) sont au moins au nombre de 16.

**4.** Dispositif selon l'une quelconque des revendications 1 à 3, caractérisé en ce que le signal obtenu sur une ligne de sommation varie suivant une fonction linéaire d'une coordonnée et le signal obtenu sur une autre ligne de sommation varie suivant une fonction linéaire de l'autre coordonnée.

**5.** Dispositif selon la revendication 4, caractérisé en ce qu'il comprend quatre lignes de sommation et les signaux ($I_1$, $I_3$, $I_2$, $I_4$) obtenus sur les lignes de sommation sont des mêmes relations linéaires respectivement d'une coordonnée, de l'opposé de cette coordonnée, de l'autre coordonnée et de l'opposé de l'autre coordonnée.

**6.** Dispositif selon la revendication 5, caractérisé en ce qu'il comprend des moyens (14-1, 14-2) pour engendrer deux signaux analogiques d'amplitudes proportionnelles aux coordonnées par combinaison linéaire des signaux obtenus sur les lignes de sommation.

**7.** Dispositif selon l'une quelconque des revendications 1 à 6, caractérisé en ce que la somme des conductances reliant une électrode quelconque aux lignes de sommation a une valeur fixe prédéterminée G telle que $R_\square$ soit supérieure ou de l'ordre de : 1/G
$R_\square$ étant la résistance superficielle de la surface résistive et N le nombre d'électrodes.

**8.** Dispositif selon la revendication 7, caractérisé en ce que les signaux obtenus sur les lignes de sommation (L-1, L-2, L-3, L-4) sont amplifiés au moyen d'amplificateurs (A-1, A-2, A-3, A-4) dont l'impédance d'entrée Z est inférieure ou de l'ordre de $\frac{1}{N} \cdot \frac{1}{G}$

**9.** Dispositif selon l'une quelconque des revendications 1 à 8, caractérisé en ce que la surface résistive a la forme d'un disque (10).

**10.** Dispositif selon la revendication 9, caractérisé en ce que la conductance G (n, l) de la liaison résistive entre une électrode ayant une coordonnée polaire angulaire $\theta_n$ dans ledit système de coordonnées de référence, et une ligne de sommation destinée à fournir un signal fonction linéaire de la coordonnée d'un point de localisation d'évènement par rapport à un axe de coordonnée polaire $\theta_l$ dans ledit système de coordonnées de référence a une valeur choisie sensiblement égale à K ( 1 + cos ($\theta_n$ - $\theta_l$)), K étant une constante prédéterminée.

**11.** Dispositif selon l'une quelconque des revendications 1 à 8, caractérisé en ce que la surface résistive a une forme rectangulaire.


## Claims

**1.** A device for two-dimensional localization of current-generating events on a resistive surface, comprising electrodes (E-1, E-2, . . . ; E'-1,E'-2, . . .) fixed to the resistive surface (10; 10') around its periphery in order to pick up currents generated by injecting current or electric charges into points on the resistive surface, and at least three current summing lines (L-1 to L-4; L'-1 to L'-4) connected to the electrodes via discrete resistive components (R(n, 1) R' (n', 1')) in such a manner as to obtain analog signals on said summing lines whose amplitude is function of the co-ordinates of said points in a predetermined reference co-ordinate system, characterized in that:
each electrode (E-1, E-2, . . . : E'-1, E'-2, . . .) is connected by means of respective resistive components to at least three summing lines (L-1 to L-4; L'-1 to L'-4) in such a manner that at least two of the said lines deliver analog signals ($I_1$, $I_2$, $I_3$, $I_4$ ) whose amplitudes are substantially linear functions of the desired co-ordinates (X,Y).

**2.** Device according to claim 1, characterized in that the number of electrodes (E-1, E-2, . . . :E'-1, E'-2, . .

.) is selected in such a manner that the distance between two adjacent electrodes is no greater than the acceptable width of a peripheral distortion margin on the resistive surface.

3. Device according to claim 2, characterized in that the electrodes (E-1, E-2. . . ; E'-1, E'-2. . .) are at least 16 in number.

4. Device according to any one of claims 1 to 3, characterized in that the signal obtained on one summing line varies as a linear function of one co-ordinate and the signal obtained on another of said summing lines varies as a linear function of the other co-ordinate.

5. Device according to claim 4, characterized in that it comprises four summing lines, and the signals ($I_1$, $I_3$, $I_2$, $I_4$) obtained on the summing lines are the same linear functions respectively of a co-ordinate, minus said first co-ordinate, the other co-ordinate, and minus said other co-ordinate.

6. Device according to claim 5, characterized in that it comprises means (14-1, 14-2) for generating two analog signals whose amplitudes are proportional to the coordinates by performing a linear combination of the signals obtained on the summing lines.

7. Device according to any one of claims 1 to 6, characterized in that the sum of the conductances connecting any of the electrodes to the summing lines has a predetermined fixed value G such that $R_\square$ is greater than or of the same order as: (1/G);
$R_\square$ being the surface resistivity of the resistive surface and N the number of electrodes.

8. Device according to claim 7, characterized in that the signals obtained on the summing lines (L-1, L-2, L-3, L-4) are amplified by means of amplifiers (A-1, A-2, A-3, A-4) whose input impedance Z is less than or of the same order as:

$$\frac{1}{N} \cdot \frac{1}{G}$$

9. Device according to any one of claims 1 to 8, characterized in that the resistive surface is shaped as a disk (10).

10. Device according to claim 9, characterized in that the conductance G(n, 1) of the resistive connection between an electrode having a polar coordinate angle $\theta_n$ in said system of reference coordinates, and a summing line intended to provide a signal which is a linear function of the co-ordinate of a point localizing an event relative to an axis whose polar co-ordinate is $\theta_1$ in said system of reference co-ordinates, has a value which is selected to be substantially equal to $K(1 + \cos(\theta_n - \theta_1))$, where K is a predetermined constant.

11. Device according to any one of claims 1 to 8, characterized in that the resistive surface is rectangular in shape.

**Ansprüche**

1. Vorrichtung zum bidimensionalen Lokalisieren stromerzeugender Ereignisse auf eine resistiven Oberfläche, umfassend Elektroden (E-1, E-2, ... ; E'-1, E'-2, ...), die am Umfang der resistiven Oberfläche (10; 10') angeordnet sind, um die Ströme zu empfangen, die durch Einbringen von Strömen oder elektrischen Ladungen auf Punkte der resistiven Oberfläche entstanden sind, mit zumindest drei Linien der Stromsammlung (L-1 bis L-4; L'-1 bis L'-4), die mit den Elektroden über diskrete resistive Elemente (R(n,1); R'(n',1')) verbunden sind, um auf den Summationslinien analoge Signale zu erhalten, deren Amplitude von den Koordinaten der Punkte in einem vorgegebenen Referenzkoordinatensystem abhängt, dadurch gekennzeichnet, daß:
jede Elektrode (E-1, E-2, ...; E'-1, E'-2, ...) über enstprechende Widerstände mit zumindest drei Summationslinien (L-1 bis L-4; L'-1 bis L'-4) so verbunden ist, daß zumindest zwei davon Analogsignale ($I_1$, $I_2$, $I_3$, $I_4$) liefern, deren Amplituden im wesentlichen linear von den festzustellenden Koordinaten (X; Y) abhängen.

**2.** Vorrichtung nach Anspruch 1, dadurch gekennzeichnet, daß die Anzahl der Elektroden (E-1, E-2, ...; E'-1, E'-2, ...) so gewählt wird, daß der Abstand zwischen zwei benachbarten Elektroden nicht größer ist als die zulässige Breite einer Verzerrungszone an der Peripherie der resistiven Oberfläche.

**3.** Vorrichtung nach Anspruch 2, dadurch gekennzeichnet, daß zumindest 16 Elektroden (E-1, E-2, ... ; E'-1, E'-2, ...) vorgesehen sind.

**4.** Vorrichtung nach einem der Ansprüche 1 bis 3, dadurch gekennzeichnet, daß das auf einer Summationslinie erhaltene Signal linear von einer Koordinate abhängt und daß auf einer anderen Summationslinie erhaltene Signal linear von der anderen Koordinate abhängt.

**5.** Vorrichtung nach Anspruch 4, dadurch gekennzeichnet, daß sie vier Summationslinien aufweist und daß die Signale ($I_1$, $I_3$, $I_2$, $I_4$), die auf den Summationslinien erhalten werden, die gleichen linearen Abhängigkeiten haben, bezüglich je der einen Koordinate, umgekehrt zu dieser Koordinate, der anderen Koordinate und umgekehrt zur anderen Koordinate.

**6.** Vorrichtung nach Anspruch 5, dadurch gekennzeichnet, daß sie Mittel (14-1, 14-2) aufweist, um zwei Analogsignale zu erzeugen, deren Amplituden proportional zu den Koordinaten sind, durch lineare Kombination der auf den Summationslinien erhaltenen Signale.

**7.** Vorrichtung nach einem der Ansprüche 1 bis 6, dadurch gekennzeichnet, daß die Summe der Leitfähigkeiten, die eine beliebige Elektrode mit den Summationslinien verbinden, einen festen vorgegebenen Wert G hat, so daß $R_\square$ von der Größenordnung 1/G ist oder größer, wobei $R_\square$ der Oberflächenwiderstand der resistiven Oberfläche ist und N die Anzahl der Elektroden.

**8.** Vorrichtung nach Anspruch 7, dadurch gekennzeichnet, daß die auf den Summationslinien (L-1, L-2, L-3, L-4) erhaltenen Signale mittels Verstärkern (A-1, A-2, A-3, A-4), deren Eingangsimpedanz Z in der Größenordnung von (1/N) $\cdot$ (1/G)ist oder kleiner, verstärkt wird.

**9.** Vorrichtung nach einem der Ansprüche 1 bis 8, dadurch gekennzeichnet, daß die resistive Oberfläche die Form einer Scheibe (10) hat.

**10.** Vorrichtung nach Anspruch 9, dadurch gekennzeichnet, daß die Leitfähigkeit G (n, 1) der resistiven Verbindung zwischen einer Elektrode mit der polaren Winkelkoordinate $\theta_n$ im genannten Referenzkoordinatensystem und einer Summationslinie, die dazu bestimmt ist, ein Signal mit linearer Abhängigkeit von der Koordinate eines Punktes, an dem sich das Ereignis ereignet hat, bezüglich einer Achse der Polarkoordinate $\theta_1$ im genannten Referenzkoordinatensystem einen Wert hat, der im wesentlichen gleich ist K (1 + cos ($\theta_n$-$\theta_1$), wobei K eine vorbestimmte Konstante ist.

**11.** Vorrichtung nach einem der Ansprüche 1 bis 8, dadurch gekennzeichnet, daß die resistive Oberfläche eine rechteckige Form aufweist.

Fig-1

Fig-2

Fig-3

Fig-4

Fig. 5

FIG-6